# EUROPEAN PATENT APPLICATION

(11) **EP 0 943 627 A1**
(43) Date of publication of application: **22.09.1999**
(21) Application number: 99104044.5
(22) Date of filing: 16.03.1999
(51) Int. Cl.: C08B 37/14

(54) **Method for preparation of amphoteric guar gum derivatives**

(30) Priority: 18.03.1998 US 40669
(71) Applicant: National Starch and Chemical Investment Holding Corporation, Wilmington, Delaware 19803-7663 (US)
(72) Inventor: Chowdhary, Manjit S., Princeton, New Jersey 08550 (US); Cottrell, Ian W., Princeton, New Jersey 08540 (US)
(74) Representative: Held, Stephan, Dr.rer.nat., Dipl.-Chem.

(57) **Abstract**

A method for the preparation of high DS amphoteric guar gum derivatives comprising reacting guar gum in an alcohol medium with alkaline base and a cationic reagent and then in the same alcohol medium with an excess of alkaline base and an anionic reagent, the cationic reagent containing an amino, ammonium, imino, sulfonium or phosphonium group and the anionic reagent containing a carboxyl, sulfonate, sulfate, phosphate or phosphonate group. Each of the cationic and anionic groups having a DS of from about 0.05 to 1 and preferably 0.1 to 1.

## Description

This invention relates to the preparation of amphoteric guar gum using an in-situ or continuous alcohol powder process.

Various polysaccharide derivatives including cationic and anionic derivatives of starch, cellulose and polygalactomannan have been disclosed in the art. Amphoteric derivatives of starch and cellulose containing both anionic and cationic groups on the same substituents are also well known and disclosed in the art.

Amphoteric derivatives of guar gum have also been disclosed but not as extensively as other polysaccharides. Blends of polygalactomannan containing cationic substituents with polygalactomannan containing anionic substituents have been disclosed in U.S. Patent 5,378,830 issued January 3,1995 to M. Yeh. An earlier reference, U.S. Patent 3,467,647 issued September 16, 1969 to H. Benninga shows amphoteric derivatives of guar gum containing both cationic and anionic substituents. The derivatives disclosed in this reference were made using an aqueous alkaline system and had fairly low degrees of substitution (DS).

Carboxyalkyl derivatives of polygalactomannan are well known as disclosed for example in U.S. Patent 3,740,388 issued June 19, 1973 to R. Montgomery et al. Carboxyalkyl hydroxyalkyl polygalactomannan derivatives are disclosed in U.S. Patent 3,723,409 issued March 27, 1993 to M. Yueh. Recent U.S. Patent 5,536,825 issued July 16, 1996 to M. Yeh et al. discloses derivatized guar gum having non-ionic, anionic or cationic groups and further exemplifies hydroxyalkyl cationic guar derivatives.

While the known art, as illustrated above, discloses polygalactomannan and guar gum derivatives, there still is the need to provide a simple and direct process to prepare amphoteric guar gum derivatives and particularly those having higher degrees of substitution.

This invention relates to a method for preparing guar gum derivatives, particularly amphoteric derivatives having high DS (degree of substitution) using an in-situ or continuous alcohol powder process.

More particularly, this invention involves a method for preparing amphoteric guar gum derivatives which comprises reacting guar gum in an alcohol medium with alkaline base and a cationic reagent and then in the same alcohol medium with an excess of alkaline base and an anionic reagent, the cationic reagent containing an amino, ammonium, imino, sulfonium or phosphonium group and the anionic reagent containing a carboxyl, sulfonate, sulfate, phosphate or phosphonate group.

The process of this invention for the preparation of amphoteric derivatives is applicable to polygalactomannan gums and especially guar gum. Particularly useful is guar gum in its powder or dry form.

The alkaline base that is used in this process is alkali metal hydroxide or ammonium hydroxide preferably sodium hydroxide. Generally a catalytic amount of alkaline base is used in the formation of the cationic group with an excess amount used in the formation or substitution of the anionic group. This excess amount of hydroxide base used will generally be an amount of from about 10 to 100%, preferably from about 25 to 50% by weight of the hydroxide based on the weight of polygalactomannan gum or guar utilized. The alkaline hydroxide base helps to carry out the reaction with the cationic reagent and the excess amount of this material helps in the reaction of anionic reagent.

The alcohol medium or solvent that is used are monohydric alcohols of 2 to 4 carbon atoms such as ethanol, isopropyl alcohol, n-propanol and tertiary butanol with isopropyl alcohol being preferred.

The process of this invention is carried out in an alcohol medium and more particularly in an aqueous alcohol slurry. Sufficient water is needed in carrying out the reactions to provide at least slight swelling of the polygalactomannan or guar gum and at the same time maintaining the integrity of the guar particles. An amount of water up to 30% by weight based on the total weight of the aqueous solvent system may be used in carrying out this process.

The amount of cationic and anionic reagents used in the process of this invention will be a sufficient amount to provide the amount or degree of substitution (DS) desired for each of the components as described herein. More particularly, from about 1 to 400% by weight of the cationic reagent, preferably about 5 to 200% based on the weight of polygalactomannan or guar gum will be used in this process. The anionic reagent will be used in an amount of from about 1 to 400% and preferably 5 to 150% by weight based on the weight of polgalactomannan or guar gum. The cationization reaction is generally carried out at a temperature of from about 35 to 75°C, preferably from about 40 to 60°C and the anionization reaction is carried out at from about 35 to 90°C , preferably from about 50 to 80°C.

The cationic reagents used in this invention are those containing amino, ammonium, imino, sulfonium or phosphonium groups. Such reagents include those containing nitrogen groups comprising primary, secondary, tertiary and quaternary amines and sulfonium and phosphonium groups attached through either ether or ester linkages. Particularly useful cationic derivatives are those containing amino or nitrogen groups having alkyl, aryl, alkaryl or cylic substituents of 1 to 22 carbon atoms and especially alkyl of 1 to 6 carbon atoms. The preferred cationic reagents are those containing the tertiary amino and quaternary ammonium ether groups.

The anionic reagents used in this invention are those containing a carboxyl, sulfonate, sulfate, phosphate or phosphonate group. The reagents containing carboxyl groups are preferred and more particularly preferred are reagents having carboxyalkyl groups containing 2 to 6 carbon atoms. Such carboxyalkyl containing reagents include halo substituted alkyl acids containing 2 to 6 carbon atoms and they may be the acid per se or an alkali metal salt. Such acids and salts include monochloro acetic acid and sodium chloroacetate.

By using the process of this invention amphoteric derivatives have DS (degree of substitution) of from about 0.05 to 1 for each of the cationic and anionic substituents and more particularly higher DS of from about 0.1 to 1 and preferably from about 0.2 to 1 are obtained. For the cationic substituent a DS of from about 0.1 to 0.6 and more preferably 0.2 to 0.5 is desired. For the anionic substituent a DS of from about 0.1 to 0.6 and more preferably about 0.2 to 0.4 is desired. The term "degree of substitution" (DS) as used herein is the average number of functional sites per anhydro sugar unit (galactose or mannose) on which there are substituent units. The amphoteric derivatives of this invention may be described more particularly as having a total DS, i.e., of both cationic and anionic substituents, of from about 0.2 to 2.0 and preferably from about 0.3 to 1.2.

It is also noted that the amphoteric guar gum derivatives prepared by this method are capable of providing relatively clear solutions when added to water. They provide light transmission of greater than 75% at 500 to 600 nanometers when added to water in a 1.0% aqueous solution. This ability to provide clear solutions with these high DS amphoteric guar derivatives as prepared by the method of this invention, provides advantages for use in different applications such as cosmetics.

It is further noted that the presence of salt in the prepared amphoteric derivatives can make a difference in clarity and viscosity in the used product. Reducing the by-product salt levels in the amphoteric polygalactomannan or guar derivatives can be accomplished by additional washing with aqueous solvent such as isopropanol containing about 5 to 25% water by volume. This will help provide better clarity, increased viscosity in water and improved compatibility with materials such as surfactants.

The following example will further illustrate the embodiment of this invention. In this example all parts are by weight and all temperatures in degrees Celsius unless otherwise noted.

### EXAMPLE 1

A 200 g sample of guar in powder form was added to 1000 mL of aqueous isopropyl alcohol (IPA)(85% IPA, 15% water) in a 3.0 liter resin kettle and stirred for 10 minutes. One hundred (100) g of 1,2 epoxy propyl N,N,N-trimethyl ammonium chloride (70% aqueous solution) was added over 15 minutes and then stirred for another 15 minutes. Twenty-five (25) g of sodium hydroxide (25% aqueous solution) was added over 5 minutes and stirred for another 10 minutes. The reaction mixture was heated to about 50 to 55°C (took about 30 minutes), stirred at this temperature for 1 hour and then the temperature raised to 75 to 80°C over 30 minutes. Two hundred-fifty (250) g of sodium hydroxide (25% aqueous solution) was then added over 2 to 3 minutes. A solution of sodium monochloro acetic acid (54 g in 50 mL of water) was added over 30 minutes and the reaction mixture stirred for another 1.5 hours. Five hundred (500) mL of isopropyl alcohol was added to the reaction mixture over 2 to 3 minutes. The reaction mixture was then cooled to about 25°C and 65 g of glacial acetic acid added to neutralize. The reaction mixture was then filtered and washed twice with 1 liter of isopropyl alcohol (85%). The reaction product was dried for 4 to 5 hours at about 60°C. This product was found to have a DS for the cationic group of 0.28 and a DS for the anionic group of 0.3.

The prepared product was then mixed in an aqueous solution (1% by weight) and evaluated for clarity and found to have greater than 85% light transmittance at 500 to 600 nanometers.

## Claims

1. A method for preparing amphoteric guar derivatives which have substituents consisting essentially of cationic and anionic groups and which comprises reacting guar gum in an alcohol medium with alkaline base and a cationic reagent and then in the same alcohol medium with excess alkaline base and an anionic reagent, the cationic reagent containing an amino, ammonium, imino, sulfonium or phosphonium group and the anionic reagent containing a carboxyl, sulfonate, sulfate, phosphate or phosphonate group.

2. The method of Claim 1 wherein the guar is in powder form.

3. The method of Claim 1 wherein the cationic reagent is one containing a tertiary amino or quaternary ammonium ether group and the anionic reagent is one containing a carboxyalkyl group.

4. The method of Claim 1 wherein the alkaline base is an alkali metal hydroxide or ammonium hydroxide and wherein the alcohol medium is a monohydric alcohol of 2 to 4 carbon atoms.

5. The method of Claim 4 wherein from about 10 to 100% by weight of hydroxide based on the weight of guar gum is used in the reaction with the anionic reagent and wherein the cationic reagent is 1,2 epoxy propyl N,N,N-trimethyl ammonium chloride and the anionic reagent is sodium monochloro acetic acid.

6. The method of Claim 4 wherein sufficient amount of cationic and anionic reagent is used to provide a guar derivative having a DS of from about 0.05 to 1 for each of the cationic and anionic substituents.

7. The method of Claim 5 wherein sufficient amount of cationic and anionic reagent is used to provide a guar derivative having a DS of from about 0.2 to 0.5 for the cationic substituent and a DS of from about 0.2 to 0.4 for the anionic substituent.

8. The amphoteric guar derivative produced by the method of Claim 1 having a DS of from about 0.1 to 1 for each of the cationic and anionic substituents.

9. The amphoteric guar derivative produced by the method of Claim 1 which demonstrates greater than 75% light transmission at 500 to 600 nanometers when dispersed in water in an amount of 1.0% by weight based on the weight of aqueous composition.

10. A clear aqueous solution containing an amphoteric guar gum derivative which has substituents consisting essentially of cationic and anionic groups, the cationic group comprising a tertiary amino or ammonium ether group and the anionic group comprising a carboxyalkyl group having 2 to 6 carbon atoms, the DS of each of the cationic and anionic groups being from about 0.1 to 1.0, said clear solution demonstrating greater than 75% light transmission at 500 to 600 nanometers when dispersed in water in an amount of 1.0% by weight based on the weight of aqueous composition.
